# EUROPEAN PATENT SPECIFICATION

(11) **EP 4 468 877 B1**
(45) Date of publication and mention of the grant of the patent: **21.10.2026**
(21) Application number: 22922815.0
(22) Date of filing: 28.01.2022
(51) Int. Cl.: A23L 2/54, A47J 31/00, B01F 23/23, B01F 23/236

(54) **DEVICE FOR CLOSING A CONTAINER AT A MOUTH OF THE CONTAINER, APPARATUS FOR PRE-PARING A BEVERAGE AND USE OF SUCH A DEVICE OR APPARATUS**
VORRICHTUNG ZUM VERSCHLIESSEN EINES BEHÄLTERS AN EINER MÜNDUNG DES BEHÄLTERS, VORRICHTUNG ZUR ZUBEREITUNG EINES GETRÄNKS UND VERWENDUNG EINER DERARTIGEN VORRICHTUNG ODER VORRICHTUNG
DISPOSITIF DE FERMETURE D'UN CONTENANT AU NIVEAU DU GOULOT DU CONTENANT, APPAREIL DE PRÉPARATION D'UNE BOISSON ET UTILISATION D'UN TEL DISPOSITIF OU APPAREIL

(43) Date of publication of application: 04.12.2024
(73) Proprietor: BRITA SE, 65232 Taunusstein (DE)
(72) Inventor: HOTHER, Stefan, 65197 Wiesbaden (DE); ZOELLER, Jochen, 56355 Nastaetten (DE)
(86) International application number: PCT/CN2022/074756
(87) International publication number: WO 2023/141975

(56) References cited:
- EP-A1- 0 935 993
- EP-A1- 3 323 772
- CN-A- 113 631 845
- GB-A- 413 220
- US-A- 4 082 123
- US-A- 4 401 016
- US-A- 4 610 282
- US-A- 4 610 282
- US-A1- 2007 257 380
- US-B1- 7 377 495

## Description

The invention relates to a device for closing a container at a mouth of the container, the device comprising:
a closure for engaging the mouth of the container to form a seal between an interior of the container and an environment of the container and of the closure; and
a pressing device for urging the closure in an axial direction towards the mouth,
wherein the pressing device is mountable to a support and carries the closure, and
wherein the pressing device comprises a chamber for accommodating pressurised fluid,
wherein the chamber is configured to expand and contract in at least the axial direction in dependence on a fluid pressure in the chamber to move the closure in axial direction relative to the support, and
wherein the chamber is provided with at least one port for supplying a pressurised fluid to the chamber and for allowing pressure to be released.

The invention also relates to an apparatus for preparing a beverage, e.g. a carbonated beverage.

The invention also relates to a use of the device.

US 4,610,282 A discloses a portable machine for carbonating liquid contained in a bottle, which machine is adapted to support the bottle by the neck through a bayonet connection.

EP 0 935 993 A1 discloses an apparatus for enriching a liquid with a gas, according to the preamble of claim 1, which apparatus requires two moving parts in the form of injection nozzle 38 and piston 64, wherein these two moving parts interact with one another.

In EP 3 323 772 A1, a device for applying a closure on a mouth of a container is disclosed. The device comprises a capping or sealing head bearing the closure, a plate-shaped body elastically coupled to the capping or sealing head, at least a centring plug integrally constrained to the capping or sealing head and slidably inserted in a slot obtained in the plate-shaped body, wherein the centring plug has a conical end and the slot being counter-shaped so as to house the conical end.

US 4 610 282 A discloses a liquid carbonating apparatus comprising a casing defining an enclosure for receiving the bottle, the enclosure including a movable wall member which is adjustable between a first position enabling the bottle to be introduced into and removed from the enclosure and a second position in which the bottle is substantially enclosed.

US 4,298,551 discloses an appliance for making an aerated beverage. The appliance includes a casing including a top portion and a bottom portion. The casing also includes a fixed portion. The casing is provided with a shatter-proof housing. At the upper end of the top portion is mounted a first hinge plate, which is hinged to a second hinge plate. Extending from the upper portion of the first hinge plate is a hollow spigot to which is connected a flexible pipe. A peripheral bead on a downwardly projecting portion of the second hinge plate receives a clamping ring which holds in place a flexible diaphragm which is provided with peripheral ribs on its upper and lower surfaces. A stopper is connected to the diaphragm by a necked-down portion so that the stopper is movable somewhat. A recess in the second hinge plate and the diaphragm together form a space above the diaphragm, the area of the diaphragm wall forming the lower face of this space being substantially greater than the area of the stopper when engaged by the neck of a bottle mounted within the housing and standing on the fixed casing portion. A flexible tube is connected via suitable connection to a nozzle which has, at its lower end, a discharge orifice. A lower end of the nozzle carrying the orifice is at a midportion of the length of the bottle. A safety overpressure valve is mounted at the top of the casing. In a normal position of the valve, communication is available between atmosphere and the space between the stopper and the nozzle, to the interior of the bottle. When a lever is depressed, a spring on a plunger moves the plunger outwardly to close the valve. In use of the appliance, the bottle is removed and is about three quarters filled with water. The shatterproof housing is pivoted outwardly to allow the bottle to be inserted in the bottom with the nozzle extending into the water in the bottle. The bottle is pushed upwardly to engage the stopper and the shatterproof housing is then pivoted back. The operator then depresses the lever, which opens a valve so that carbon dioxide passes up through this valve, through the flexible tube, into the nozzle, from which it is projected through the orifice. The gas entering the bottle will try to escape via the stopper, but the area of the diaphragm is much greater than the area of the stopper which is presented to the gas, so that the diaphragm flexes downwardly pushing the stopper firmly into place. This aeration step is carried out until the safety valve begins to leak, indicating that the device has reached the desired pressure. The lever is then released, allowing the diaphragm to flex upwardly so that the bottle can readily be removed.

A problem of the known appliance is that the appliance requires a bottle made to within tight tolerances or a facility for accurately raising the bottle into engagement prior to depressing the lever. The diaphragm allows for only limited movement of the stopper. Even bottles made to a nominally standard size will, however, vary in height depending on the material (glass, polymer, metal) of which they are made.

It is an object of the invention to provide a device, apparatus and use of the types defined above in the opening paragraphs that are suitable for use with bottles having a dimension in a direction corresponding to the axial direction, in use, that can be within a relatively wide tolerance range.

This object is achieved according to a first aspect by the device according to claim 1, which is characterised in that a side wall surrounding the chamber is defined by at least one part comprised in the pressing device that is extendible and contractable in at least the axial direction.

Because the at least one part defining the side wall surrounding the chamber is extendible and contractable in at least the axial direction, the axial dimension of the chamber can adapt over a larger range than would be possible with only a diaphragm forming a bottom wall of the chamber at the axial end proximal to the closure. Extension and contraction is through deformation, e.g. at least one of folding, respectively unfolding, and stretching, respectively relaxation, of the side wall. In use, the support is generally stationary with respect to the container. This can be because the container and a structure comprising the support are both placeable on the same support surface, e.g. a table top or worktop. Alternatively, the support can be comprised in a chassis of an apparatus further comprising a platform for placement of the container. The pressing device mounts the closure to the support. The chamber is configured to expand and contract to move the closure in axial direction. The side wall is configured like a bellows coupling, so that a force on the closure due to engagement with the container is transferred to the support via the side wall when the pressing device is mounted to the support. The side wall is flexible and will contract when the container is initially positioned and the mouth engages the closure. The amount of contraction can vary according to the axial dimension of the container. This ensures a degree of sealing sufficient to ensure that subsequent supply of pressurised fluid into the chamber only needs to press the closure against the mouth more firmly. Contact is already established.

The closure will generally be carried by the pressing device at an axial end of the pressing device. The closure may in particular be suspended from the pressing device. At least the opposite axial end of the pressing device will generally be held in position against the support.

The device is suitable for use with a wide range of containers having a mouth. Generally, the containers will be of the type having a neck, so that the mouth has a smaller width than the maximum width of the container. Examples include flasks (e.g. thermos flasks), bottles, carafes and the like. The mouth need not be the only pour opening of the container.

The closure is configured to engage the mouth to form a seal between an interior of the container and an environment of the container and the closure. Thus, the closure may close the container completely or may allow for passage of fluid through the closure into and/or out of the container. The closure may include an elastic body for engaging the container at the mouth of the container, with the body being more elastic than a container made of metal, ceramics or glass. This body, or the closure more generally, may have a conical or frusto-conical exterior surface for engaging the container in an orifice forming the mouth. Alternatively, the body, or the closure more generally, may be generally cylindrical, with an axial end surface engaging an axial end surface formed by a rim of the container that forms the mouth. The body, or closure more generally, may alternatively form a tight fit around and over an end section of the container forming the mouth. Thus, the closure may comprise a cap-shaped part for covering the end section of the neck of a bottle-shaped container where the pour opening is formed. Where the body, or the closure more generally, has a conical or frusto-conical exterior surface for engaging the container in an orifice forming the mouth, variations in opening diameter of the mouth can also be compensated for.

The pressing device is configured to urge the closure into an axial direction towards the mouth. The axial direction is defined by the axis of movement.

Since contact is already established prior to the supply of pressurised fluid, towards the mouth may mean no more than that a pressing force is exerted in that direction, the actual (additional) movement being minimal.

As mentioned, the pressing device is configured to mount the closure to the support. The closure is otherwise free-standing, so that changes in the axial dimension of the part of the pressing device via which the closure is connected to the support result in axial displacement of the closure relative to the support. For a device for use with a container with a base and with the mouth at the top opposite the base, the closure will generally be suspended from the support via the pressing device, in particular the side wall of the chamber. Thus, one axial end of the side wall will be fixable directly or via one or more further parts to the support and the other end will be fixed directly or via one or more further parts to the closure.

The chamber is configured for receiving a fluid, which may be a gas, liquid, vapour or liquid-vapour mixture, for example. The chamber is fluid-tight, except for at least one port, which includes at least one port through which pressurised fluid may enter the chamber. A further port may be provided to release the pressure or the pressure release may take place through the same port(s). The chamber is configured to expand and contract in at least the axial direction in dependence on the fluid pressure in the chamber. The volume of the chamber may increase and decrease, respectively, in the process or remain substantially the same. In the latter case, there will still be expansion and contraction in the axial direction, however, to move the closure in axial direction relative to the support.

The side wall surrounds the chamber at least laterally. That is to say that the wall is closed on itself around at least the reference axis. The part or parts defining the side wall is or are extendible and contractable in at least the axial direction in dependence on the fluid pressure in the chamber, i.e. the side wall is flexible. This means that sufficient pressing force on the closure by the container will also cause contraction of the at least one part defining the side wall in axial direction. Where the closure is suspended from the support via the side wall, the weight of the closure may also cause some extension of the at least one part defining the side wall. The side wall may, but need not, be elastic. Expansion and contraction may also be due to folding of the (flexible) side wall.

At least a section of the chamber may be bounded at least laterally by the side wall.

The side wall thus determines the lateral extent of the chamber (in a configuration in which the axis corresponds to an upright axis through the chamber interior). The material of the at least one part defining at least the side wall will generally be impermeable to the fluid. Thus, the part defining the side wall is at least one of the parts confining the fluid to the chamber, but for the at least one port. This means that seals, as between a piston and cylinder, are not required to prevent unintended escape of fluid from the chamber. The at least one part defining the side wall fulfils the dual function of confining the pressurised fluid and compensating for dimensional variations between containers to be closed. In a particular example, the chamber interior forms a space having a bounding surface with genus 0 (in a geometric topological sense). An interior surface of the chamber-defining part is comprised in that bounding surface. In such an example, the chamber interior is unpartitioned. More generally, the example is one particular instance of an embodiment in which the at least one chamber-defining part defines a side wall bounding the chamber and the chamber interior can be completely filled with fluid. Partitions to maintain pressure differentials between sections of the chamber interior are absent. This reduces sealing requirements and simplifies assembly.

The chamber may be defined by a part comprising or corresponding to the part defining at least the side wall, which part is elastic. In this embodiment, the part is configured as a balloon, inflatable by the fluid.

In another embodiment, the side wall is a corrugated side wall.

In this embodiment, the side wall is flexible. The side wall can compensate for variations in dimension of the container in a direction corresponding to the axial direction over a relatively wide range without necessarily being stretched and relaxed elastically. This increases the lifespan of the at least one part defining at the side wall. Furthermore, the part is not biased into a configuration in which the axial dimension of the chamber is relatively small. On the contrary, in configurations in which the pressing device is suspended from the support, the closure will tend to be pushed upwards by a container against at least gravitational pull on the closure. There is thus already a certain pressing force before pressure in the chamber is increased.

In an embodiment of the device, the pressing device comprises a resilient part biasing the at least one part defining the side wall into an extended configuration.

The resilient part may be a part separate from the at least one part defining the chamber. Alternatively, the resilient part may be comprised in the at least one parts defining the chamber, e.g. defining the side wall. For example, the side wall maybe compressible against a resilient restoring force exerted by the part or parts defining the side wall. Regardless of the precise implementation, a force urging the closure into engagement with the mouth of the container is already exerted before the pressure in the chamber is increased. This is of particular use when pressurised fluid is supplied to the chamber and container interior simultaneously, in use. Pressure in both is readily and reliably built up.

In a particular example of this embodiment, the resilient part comprises a spring.

The spring may be a compression spring, leaf spring or conical disc spring (Belleville spring), for example. It may be made of a different material than the part or parts defining the chamber. The latter may be made of a polymer selected for fluid-tightness, for example, whereas the spring may be made of metal (including alloys). The spring may be arranged inside the chamber, e.g. in the form of a coil spring aligned with a central axis of the chamber corresponding to the axis of movement. This keeps the closure aligned with this axis relatively well, resulting in a uniform initial pressing force. Elaborate guiding mechanisms are not required to achieve this effect.

In an embodiment of the device, the at least one part defining at least the side wall comprises a moulded part.

Thus, it is relatively easy to manufacture the part or parts defining the chamber such that they are also fluid-tight and may thus bound the chamber. The material of the moulded part may comprise a polymer and/or at least one elastomer, e.g. silicone rubber, for example.

An embodiment of the device further comprises a sleeve laterally surrounding the part defining at least the side wall over at least part of an axial extent of the side wall for supporting the part defining at least the side wall in at least an expanded state of the chamber.

The at least one part defining the side wall is able to contract and extend in axial direction along the sleeve. They are at most attached to each other at one axial position. The sleeve limits the range of radial expansion of the at least one part defining the chamber. The chamber side wall is thus stretched relatively little or not at all in radial direction when the internal pressure in the chamber is increased. The lifespan of the at least one part defining at least the side wall can therefore be relatively long. In particular where the side wall bounds the chamber at least laterally, leakage of fluid in the course of the lifespan of the device is limited or prevented. The side wall can be relatively thin and flexible. The sleeve will be defined by a stronger wall, having a larger thickness and/or being made of stiffer material. In particular, the sleeve may have a fixed axial dimension, so that there are no pre-defined weaknesses. Where the materials of the sleeve and the at least one part defining at least the side wall of the chamber are different, they may be selected to allow sliding of the one along the other with relatively little friction.

In an embodiment of the device, at least one passage for a or the fluid is provided through the closure.

The passage may allow for fluid, e.g. gas, liquid, vapour or a mixture, to be supplied to the closed container and/or vented from the closed container. Where both are possible, there may be more than one passage or a system of conduits and valves for reversing the direction of flow. The same fluid may be used to pressurise the chamber or one fluid, e.g. a gas, may be supplied to the chamber, in use, and a different fluid or mixture may be supplied to or vented from the container through the at least one passage, in use. One use scenario is in a hot beverage maker, e.g. a coffee maker, to supply the beverage to a thermos flask closed by the device. One passage through the closure may allow for supply of the beverage to the container. Another passage may allow for the venting of vapour from the container. The fluid supplied to the chamber may be cold water or a gas, e.g. carbon dioxide, nitrogen or compressed air. In a carbonation apparatus, the fluid supplied and/or vented through the at least one passage through the closure will be carbon dioxide and the fluid supplied to the chamber may also be carbon dioxide. In this embodiment, the container need not include a separate further port and valve (e.g. as disclosed in WO 2014/000092 A1).

In an example of this embodiment, the device comprises a nozzle for supplying a or the fluid to the container through the mouth of the container, wherein the nozzle protrudes in axial direction with respect to the closure from an axial end of the closure distal to the at least one part defining at least the side wall.

The nozzle will generally be shaped as a lance, having one or more orifices at a free end and/or along its length. This embodiment is particularly suited for use in a carbonation apparatus. Carbon dioxide under pressure is then injected into liquid in the container via the nozzle. The nozzle allows for supply of carbon dioxide gas at a level below the liquid level in the container. This results in relatively good mixing and relatively long contact times for dissolving the carbon dioxide gas in the liquid. Furthermore, there is no need to maintain a head space above the liquid in the container at an elevated pressure.

In a particular example, the nozzle is fixed in position relative to the closure.

In this example, the axial position of the nozzle relative to the liquid level in the container is independent of variations in the axial dimension between containers. The extendible and contractable part defining the chamber side wall ensures that the closure is at the same level above a base of the container. Because the nozzle is fixed in position relative to the closure, the nozzle orifice(s) is or are also at the same level above the base of the container. The container may be provided with markings enabling a user to ensure that a particular fill level is achieved. The path length for the gas to the surface of the liquid is then uniform, resulting in relatively uniform carbonation levels.

In an example of any embodiment in which at least one passage for a or the fluid is provided through the closure and the device comprises a nozzle for supplying a or the fluid to the container through the mouth of the container, wherein the nozzle protrudes in axial direction with respect to the closure from an axial end of the closure distal to the at least one part defining at least the side wall, the nozzle is connectable to a source of pressurised fluid, and at least one passage for interconnecting the chamber and an interior of the container is provided through at least the closure.

In this embodiment, pressurised gas is first delivered to the interior of the container via the nozzle, in use. The gas that is not dissolved in the liquid in the container rises to the head space above the liquid. From there, the gas passes through the at least one passage for interconnecting the chamber and the interior of the container. The gas arriving in the chamber is thus at a lower pressure than when the gas is injected into the liquid. It is possible to achieve a relatively high degree of carbonation without subjecting the at least one part defining the chamber to such a high pressure. This prolongs the lifespan of those parts, in particular the at least one part defining the side wall. There is a relatively low risk of this part rupturing.

In an example of this embodiment, the chamber is provided with at least one port for interconnecting the chamber and a passage for connection to at least one valve for venting fluid from the passage.

The port interconnects the chamber and the passages in a flow sense. The passage may comprise discrete sections formed by conduits interconnected by fittings. The at least one valve may comprise a pressure relief valve. A pressure relief valve will generally be set to open autonomously when the pressure in the passage exceeds a certain set pressure. The at least one valve will generally vent to the environment. The at least one valve may also comprise a vale for relieving pressure in the chamber to remove the closure from the container. Such a valve may be actuated by a hand-operable actuator or an electric, pneumatic or hydraulic actuator, for example.

In an embodiment of the device, a projection of a bottom wall defining the chamber at an axial end proximal to the closure has an area larger than a maximum area of the mouth of the container closable by the closure.

This embodiment is suitable for ensuring that, even if the pressure in the chamber is only slightly larger or even slightly lower than in a head space of the container just below the closure, the closure is still urged into firm engagement with the mouth of the container.

According to another aspect, the apparatus according to the invention for providing a beverage, e.g. a carbonated beverage, comprises:
a support;
a device according to the invention, mounted to the support; and
a system for connecting the device to a source of pressurised fluid to supply the pressurised fluid to the chamber of the pressing device and for allowing pressure in the chamber to be released.

The support may be formed by a chassis, frame or housing of the apparatus, for example. The support may further comprise a platform for placement of the container. Alternatively, the support may be placeable on a support surface like a table top on which the container is also placeable. In either case, the support positions the device for closing the container at the mouth of the container relative to the container. The pressing device is mounted to the support, such that an axial end proximal to the container is able to move relative to the support and thus the container in the axial direction, whereas a distal end is fixed in position relative to the support. The support may position at least the pressing device above the container, such that the closure is suspended from the support via the pressing device. The extendible and contractable part(s) defining the chamber side wall compensate(s) for variability in height between containers at first instance and ensures that the closure already seals before pressurised fluid is supplied to the chamber. This pressurised fluid originates from a source of pressurised fluid, which may be comprised in the apparatus or connectable in flow sense to a fitting or similar connector of the apparatus. In other embodiments, the apparatus comprises a pump for raising the pressure of the fluid, which may still originate from an external source.

An embodiment comprises a system for supplying a or the pressurised fluid to the container.

This embodiment is particularly suitable for providing carbonated beverages.

In an example of this embodiment, the apparatus is configured to supply the pressurised fluid to the chamber via an interior of the container.

In this embodiment, fluid can be delivered to the container at a higher pressure than to the chamber. This prolongs the lifespan of the at least one part defining the chamber of the pressing device.

In an embodiment of the apparatus, the system for connecting the device to a source of pressurised fluid comprises a fitting for connecting a gas cylinder and at least one of:
(i) a supply valve operable to open and close a passage from the fitting to the device for closing the container; and
(ii) an actuator for operating a supply valve comprised in the gas cylinder to open and close a flow path from an interior of the gas cylinder to the fitting.

The supply valve may be operable by an actuator that may be operable by hand or controlled by a control system of the apparatus. The gas cylinder is suitable for delivering gas that his already at an elevated pressure. A further pump can therefore be dispensed with. This makes the apparatus cheaper and quieter, and thus suitable for use in a domestic environment.

An embodiment of the apparatus comprises at least one valve for venting pressurised fluid and at least one conduit forming at least part of a respective flow path fluidly connecting that valve to the chamber.

This valve may be operable by an actuator that may be operable by hand or controlled by a control system of the apparatus. Thus, pressure in the chamber can be relieved to remove the closure. Venting may be to atmosphere, e.g. via an interior of a housing of the apparatus.

A particular example of this embodiment further comprises a safety valve upstream of the valve for venting pressurised fluid along the flow path.

This embodiment protects the valve for venting pressurised fluid from damage in case of overpressure, as well as protecting the at least one part defining the chamber.

In an example of any embodiment of the apparatus in which the system for connecting the device to a source of pressurised fluid comprises a fitting for connecting a gas cylinder and at least one of: (i) a supply valve operable to open and close a passage from the fitting to the device for closing the container; and (ii) an actuator for operating a supply valve comprised in the gas cylinder to open and close a flow path from an interior of the gas cylinder to the fitting, and in which the apparatus comprises at least one valve for venting pressurised fluid and at least one conduit forming at least part of a respective flow path fluidly connecting that valve to the chamber, at least one of the valves for venting pressurised fluid is in fluid communication with the passage downstream of the supply valve, and the supply valve and the at least one valve for venting pressurised fluid that is in fluid communication with the passage downstream of the supply valve are operable by respective actuators that are arranged to act in tandem.

Thus, one user control can be used alternately to supply pressurised fluid to urge the closure against the mouth of the container and to relieve the pressure in the chamber of the pressing device to allow the container and the closure to be separated. Thus, the supply valve is opened when the venting valve is closed and vice versa.

According to another aspect, the invention teaches the use of at least one of a device according to the invention and an apparatus according to the invention to carbonate a beverage in a container closed to an environment of the container by the device.

The apparatus and device are also configured for such use. The beverage may be an aqueous beverage, i.e. potable water, optionally with syrup or some other type of flavouring added.

The invention will be explained in further detail with reference to the accompanying drawings, in which:
- Fig. 1: is a very schematic diagram of the main components of a first apparatus for providing a beverage;
- Fig. 2: is a first cross-sectional view of an implementation of the first apparatus in a second apparatus;
- Fig. 3: is a second cross-sectional view of the apparatus of Fig. 2;
- Fig. 4: is a perspective view of a body forming a closure in the apparatus of Figs. 2 and 3;
- Fig. 5: is a plan side view of the closure of Fig. 4;
- Fig. 6: is a perspective view of a moulded part forming at least a side wall of a chamber in a pressing device for urging the closure into engagement with a mouth of a bottle in the apparatus of Figs. 2 and 3;
- Fig. 7: is a plan side view of the moulded part of Fig. 6;
- Fig. 8: is a cross-sectional view of an assembly of the moulded part and further parts forming the main components of the pressing device;
- Fig. 9: is a cross-sectional perspective view of the assembly of Fig. 8;
- Fig. 10: is a very schematic diagram of the main components of a third apparatus for providing a beverage;
- Fig. 11: is a cross-sectional view of an assembly of components of a pressing device for urging a closure into engagement with a mouth of a bottle in a fourth apparatus that is an implementation of the apparatus of Fig. 10;
- Fig. 12: is a cross-sectional perspective view of the assembly of Fig. 11;
- Fig. 13: is a cross-sectional view of part of a fifth apparatus for producing a beverage, which part includes at least a pressing device for urging a closure into engagement with a mouth of a bottle;
- Fig. 14: is a second cross-sectional view of the part of the fifth apparatus shown in Fig. 13;
- Fig. 15: is a cross-sectional view of part of a sixth apparatus for producing a beverage, which part includes at least a pressing device for urging a closure into engagement with a mouth of a bottle; and
- Fig. 16: is a second cross-sectional view of the part of the sixth apparatus shown in Fig. 15.

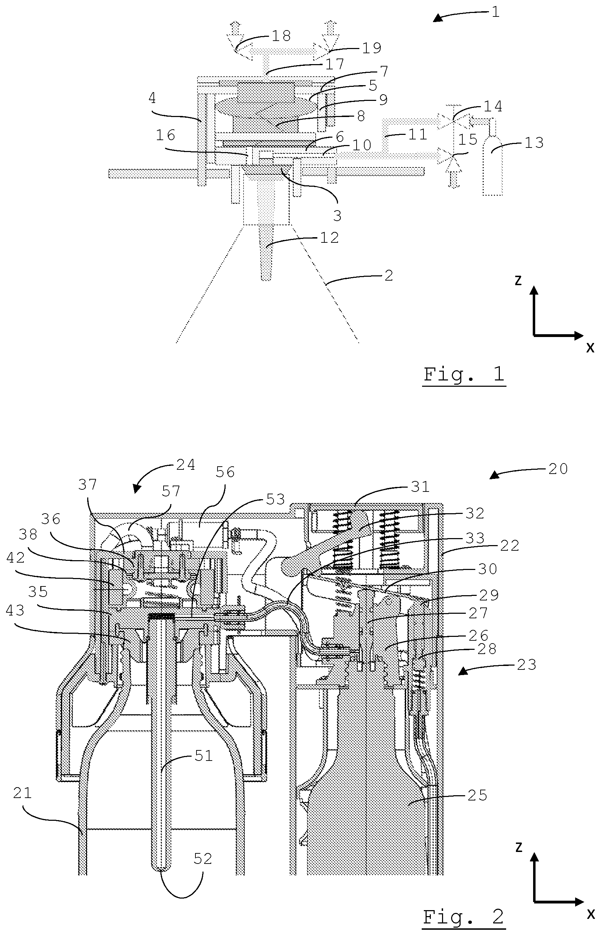

The basic components of a first configuration of an apparatus for providing a beverage will be described using the example of a first carbonation apparatus 1 (Fig. 1). The first carbonation apparatus 1 comprises a device for closing a bottle 2 at a mouth of the bottle 2. That device comprises a closure 3 for engaging the mouth of the bottle 2 to form a seal between an interior of the bottle 2 and an environment of the bottle 2 and the closure 3. The device further comprises a pressing device for urging the closure 3 in an axial direction z towards the mouth. The axial direction z is defined by an axis of movement of the closure 3. The axis of movement will be generally aligned with an upright axis of the bottle 2, approximately perpendicular to the mouth. Thus, in the illustrated embodiment, the axial direction corresponds to the vertical direction.

The pressing device is mounted to the support 4 at an, in use, higher axial end and carries the closure 3 at an, in use, lower axial end. In the illustrated embodiment, a chamber-defining part 5 is clamped at one axial end to a movable support part 6 and at an opposite axial end to a connecting part 7 for connecting the chamber-defining part 5 to the support 4. The chamber-defining part 5 is inflatable and deflatable such that the chamber formed in the chamber-defining part 5 expands and contracts in at least the axial direction z. The movable support part 6 defines a substantially rigid bottom wall of the chamber and the support 4 and connecting part 7 define a substantially rigid top wall of the chamber. The chamber-defining part 5, by contrast, defines a flexible side wall that surrounds and bounds the chamber. Thus, the chamber-defining part 5 is extendible and contractable in at least the axial direction in dependence on the fluid pressure in the chamber. The chamber-defining part 5 may be relatively elastic, so that the side wall can be stretched. Alternatively, the side wall may simply be flexible and fold, e.g. provided with corrugations and thus shaped like a bellows-coupling.

A separate spring 8 biases the chamber-defining part 5 into the extended configuration. This is the configuration in which the axial dimension of the chamber and thereby the pressing device is relatively large. In use, the bottle 2 pushes the closure 3 in the opposite axial direction z against the biasing force, even if the chamber is not pressurised. Instead of, or in addition to, using a separate spring 8, the chamber-defining part 5 may be configured to generate the biasing force.

A relatively rigid sleeve 9 surrounds the chamber-defining part 5 laterally over at least part of the axial extent of the chamber-defining part 5. Expansion of the chamber-defining part 5 in radial direction is limited by the sleeve 9.

The movable support part 6 is provided with a first passage 10 connected at one end to a fluid delivery conduit 11. The fluid delivery conduit 11 may comprise a flexible conduit, e.g. a hose, to accommodate movement of the movable support part 6. A nozzle 12 for injecting pressurised gas into liquid in the bottle 2 is fluidly connected to the first passage 10 at the other end of the first passage 10. The nozzle 12 protrudes in axial direction z with respect to the closure 3 from a lower axial end of the closure 3, which is the axial end distal to the chamber-defining part 5.

The fluid delivery conduit 11 is connected to a source 13 of pressurised fluid, in this case carbon dioxide gas in a gas cylinder, via a supply valve 14. The supply valve 14 may be operable by hand or by an electrically, pneumatically or hydraulically powered actuator. The actuator is coupled to an actuator for operating a venting valve 15 connected to the fluid delivery conduit 11 downstream of the supply valve 14. The venting valve 15 is thus opened when the supply valve 14 is closed and vice versa.

A second passage 16 through the movable support part 6 and the closure 3 interconnects the chamber in the chamber-defining part 5 and the interior of the bottle 2. Thus, pressurised gas from the source 13 is delivered to the chamber via the interior of the bottle 2 when the supply valve 14 is opened. A port through the connecting part 7 allows the pressurised fluid to enter a venting conduit 17 to which a first and second pressure relief valve 18,19 are connected. The first pressure relief valve 18 is set to open at a higher pressure than the second pressure relief valve 19. The first pressure relief valve 18 protects against over-pressure and thus functions as a safety valve. The second pressure relief valve 19 sets the pressure in the chamber of the pressing device. The pressure at which the second pressure relief valve 19 is set to open may be variable.

In an alternative embodiment, the second pressure relief valve 19 is replaced by throttle providing a passage for pressurised fluid to be vented from the chamber. In yet another embodiment the second pressure relief valve 19 can opened by means of an actuator. This actuator may be coupled to those of the supply valve 14 and the venting valve 15, so as to open with the venting valve 15.

The interior area of the bottom wall of the chamber as projected in axial direction is larger than the area of the mouth of the bottle 2, indeed larger than the area of the mouth of any bottle still closable by the closure 3. Thus, there is always a net force urging the closure 3 into fuller engagement with the mouth of the bottle 2 when pressurised fluid is supplied to the chamber via the bottle 2.

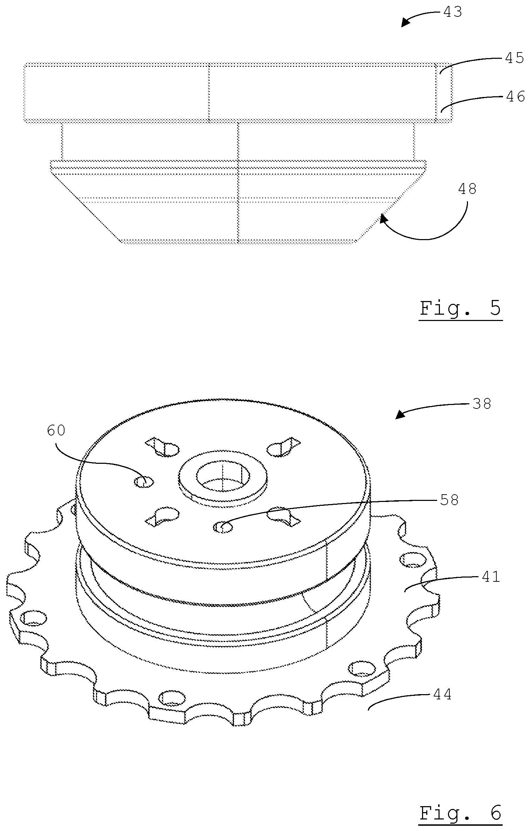

A second carbonation apparatus 20 (Figs. 2-9) for carbonating liquid in a bottle 21 is constructed to conform to the basic configuration and operating principles of the first carbonation apparatus 1. The second carbonation apparatus 20 comprises a housing 22. The housing 22 comprises a body part 23 and a head part 24. The body part 23 is configured to house a replaceable carbon dioxide gas cylinder 25. To this end, a fitting 26 is arranged within the housing 22. A supply valve (not shown in detail) in the replaceable carbon dioxide gas cylinder is operable by a plunger 27 journalled for movement in the fitting 26. The supply valve in the replaceable carbon dioxide gas cylinder 25 functions as the supply valve 14 of the first carbonation apparatus 1.

A venting valve 28 is normally closed, but can be opened by moving a venting valve plunger 29. A lever 30 that can be actuated by a user via a button 31 and rocker 32 couples movement of the two plungers 27,29, such that the supply valve is opened when the venting valve 28 is closed and vice versa.

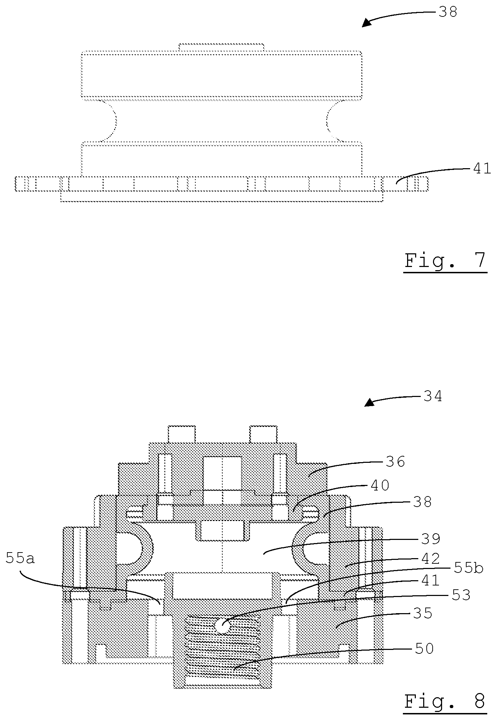

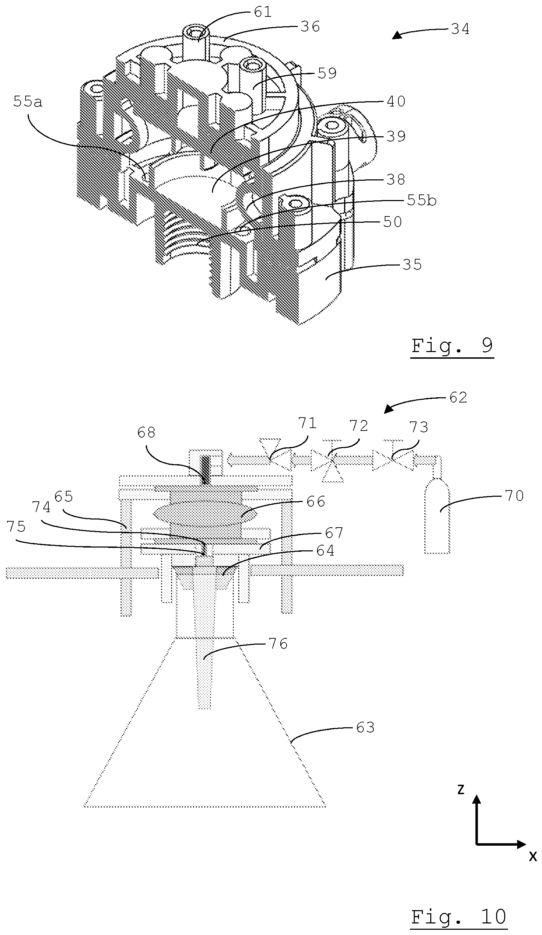

A flexible delivery tube 33 extends from the fitting 26 to a pressing device assembly 34 (Figs. 8, 9). The pressing device assembly 34 comprises a movable support part 35. The movable support part 35 is relatively rigid and thus shape-stable. The movable support part 35 may be made of metal or a polymer (composite) material, for example.

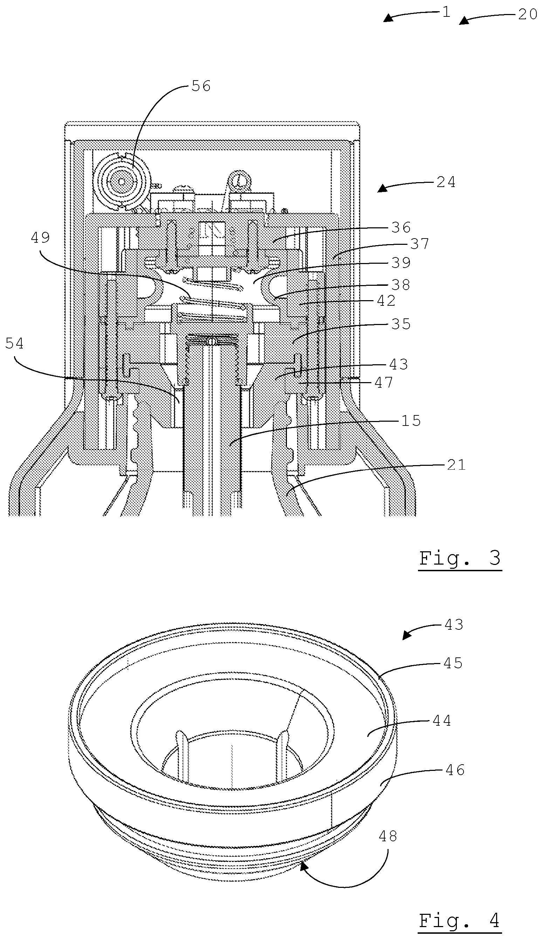

A connecting part 36 may connect the pressing device assembly 34 to a support 37 (Figs. 2 and 3) arranged in the head part 24 of the housing 22, or at least abut the support 37 in axial direction z. The connecting part 36 is also relatively rigid and thus shape-stable. The connecting part 36 may also be made of metal or a polymer (composite) material, for example.

The pressing device assembly 34 further comprises a chamber-defining part 38 that defines at least a side wall that bounds and surrounds a chamber 39 for receiving fluid, in this case carbon dioxide gas. The chamber-defining part 38, or at least the section defining the side wall, is relatively flexible and may be made of an elastomer, e.g. silicone rubber. The chamber-defining part 38 is a moulded part, e.g. obtainable by injection-moulding. The chamber-defining part 38 can expand and contract in an axial direction z, which is substantially vertically aligned in this example. The material of the chamber-defining part 38 is essentially gas-tight. The side wall comprises a corrugation enabling axially directed contraction and expansion of the chamber-defining part 38.

A support disc 40 fixed to the connecting part 36 clamps one axial end of the chamber-defining part 38 to the connecting part 36. The chamber-defining part 38 is provided with a flange 41 at an opposite axial end. The flange 41 is clamped between a sleeve 42 and the movable support part 35. The sleeve 42 limits radially outward expansion of the chamber-defining part 38. The chamber-defining part 38 is free to expand and contract in axial direction along the inside of the sleeve 42, however.

A closure is formed by a closure body 43 having a flange 44 with axially protruding ribs 45,46 received in grooves in the movable support part 35 and a clamping ring 47 (Fig. 3). Thus, the flange 44 is held between the movable support part 35 and the clamping ring 47.

The closure body 43 may be made of resilient material, e.g. comprising a polymer. The material may be an elastomer, synthetic or natural rubber, e.g. silicone rubber. It is also possible for the closure body 43 to comprise multiple components of different materials, e.g. differing in elasticity.

In the illustrated embodiment, the closure body 43 is shaped like a stopper, having a frusto-conical exterior sealing surface 48 for engaging a rim of the bottle 21 surrounding a mouth of the bottle 21.

A spring 49 (Fig. 3) is arranged in the chamber 39. This spring 49 urges axial ends of the chamber 39 apart. The chamber-defining part 38 is thus biased into the axially extended configuration. In the illustrated embodiment, the spring 49 extends the pressing device into engagement with axial abutments limiting further axial expansion in the absence of the container, in this case the bottle 21. This may obviate the need for fasteners to fix the pressing device to the support 37. The spring 49 merely urges the connecting part 36 in axial direction z into shape-locked engagement with the support 37. The same effect can be achieved with other types of biasing than the spring 49.

A platform or other support (not shown) for supporting the bottle 21 under the head part 24 may be comprised in the housing 22 or provided by a support surface on which the housing 22 is placed. The position of the platform or support and the height of the bottle 21 are such that the bottle 21 is placeable under the head part 24 with the mouth engaging the closure body 43. The closure body 43 is thereby moved axially towards the support 37 against a force exerted by the spring 49. In embodiments with a platform or support, these may be adjustable, replaceable or adaptable to accommodate containers with differing axial dimensions. Due to the axial extension and contraction of the chamber-defining part 38, the adjustment, replacement or adaptation need not be precisely calibrated.

The movable support part 35 comprises a socket 50 with an internal screw thread for engaging an external thread at an axial end of an elongated nozzle 51. An exit orifice 52 at an axial end of the nozzle distal to the movable support part 35 enables carbon dioxide gas to be injected into the liquid in the bottle 21 below a level of the liquid in the bottle 21. The nozzle 51 may be made of stainless steel, for example. Because the nozzle 51 is arranged to move in axial direction with the closure body 43 and the movable support part 35 the distance between the exit orifice 52 and the liquid surface in the bottle 21 will be the same for a given fill level, regardless of whether the bottle 21 has exactly the nominal height for which the second carbonation apparatus 20 is designed. This allows the bottle 21 to be selected from a range of bottles having nominally identical shapes and dimensions but made of different materials, e.g. aluminium, glass or polymer material. The path length of the carbon dioxide gas from the exit orifice 52 to the liquid surface will always be the same for a given fill level of the bottle 21. This gives rise to consistent carbon dioxide concentrations.

A laterally extending passage 53 (Figs. 2 and 8) through the movable support part 35 interconnects the flexible delivery tube 33 and the socket 50 to supply carbon dioxide gas to the nozzle 51. The nozzle 51 is provided with a shoulder that limits the distance over which the nozzle 51 can be screwed into the socket 50 and carries a sealing element for closing the socket 50. Thus, all the pressurised gas is forced through the nozzle 51.

In use, the gas bubbles to the surface of the liquid in the bottle 21 into a headspace above the liquid. The head space is interconnected with the chamber 39 by a concentric annular passage 54 (Fig. 3) through the closure body 43 and passages 55a,b (Fig. 9, 10) through the movable support part 35. The concentric annular passage 54 is concentric with the socket 50 and thereby the nozzle 51. The passages 55a,b into the chamber 39 are uniformly distributed, in this case along a circle.

The chamber bottom wall is defined by the movable support part 35 and the chamber-defining part 38. The area of the chamber bottom wall projected in axial direction is larger than a projected area of the closure body 43.

A pressure relief valve 56 is connected to the chamber 39 via a venting conduit 57 (Fig. 2). A first aperture 58 in a top-wall defining section of the chamber-defining part 38 and a first tube 59 in the connecting part 36 define a first port for interconnecting the chamber 39 and the venting conduit 57. A second aperture 60 and second tube 61 define a second port for interconnecting the chamber 39 and a further venting conduit (not shown), which may lead to a further pressure relief valve (not shown) configured to open at a different pressure than the pressure relief valve 56.

In use, the spring 49 and the weight of the movable support part 35 and closure body 43 ensure that the bottle 21 is closed at the mouth on placement in the second carbonation apparatus 20. When the supply valve actuated by the plunger 27 is opened, pressure builds up in the head space in the bottle 21 and in the chamber 39. The pressure in the chamber 39 is lower. Due to the difference in area projected in axial direction, the closure body 43 is still pressed more firmly onto the bottle 21. When carbonation is finished, the supply valve is closed and the venting valve 28 simultaneously opened to relieve the pressure in the head space and the chamber 39. The bottle 21 can then be removed and a cap (not shown) placed on the bottle 21 to prevent the carbonated liquid from going flat.

Basic components of a third carbonation apparatus 62 (Fig. 10) shown only schematically comprise a device for closing a bottle 63 at a mouth of the bottle 63. That device comprises a closure 64 for engaging the mouth of the bottle 63 to form a seal between an interior of the bottle 63 and an environment of the bottle 63 and the closure 64. The device further comprises a pressing device for urging the closure 64 in an axial direction z towards the mouth. The axial direction z is defined by an axis of movement of the closure 64. The axis of movement will be generally aligned with an upright axis of the bottle 63, approximately perpendicular to the mouth. Thus, in the illustrated embodiment, the axial direction z corresponds to the vertical direction.

The pressing device is mounted to a support 65 at an, in use, higher axial end and carries the closure 64 at an, in use, lower axial end. In the illustrated embodiment, a chamber-defining part 66 is fixed to a movable support part 67 at one axial end and to the support 65 at an opposite axial end. The chamber-defining part 66 is inflatable and deflatable such that the chamber formed in the chamber-defining part 66 expands and contracts in at least the axial direction z. The movable support part 67 defines a substantially rigid bottom wall of the chamber and the support 65 and chamber-defining part 66 define a substantially rigid top wall of the chamber. The chamber-defining part 66, by contrast, defines a flexible side wall that surrounds and bounds the chamber. Thus, the chamber-defining part 66 is extendible and contractable in at least the axial direction z in dependence on the fluid pressure in the chamber. The chamber-defining part 66 may be relatively elastic, so that the side wall can be stretched. Alternatively, the side wall may simply be flexible and fold, e.g. provided with corrugations and thus shaped like a bellows-coupling.

A supply port 68 into the chamber is provided through the support 65 at an, in user, upper axial end. The supply port 68 interconnects the chamber and a delivery conduit 69. Going upstream to a source 70 of pressurised fluid, a pressure relief valve 71, venting valve 72 and supply valve 73 are provided in the delivery conduit 69. Actuators of the venting valve 72 and the supply valve 73 may be coupled, as in the first and second carbonation apparatuses 1,20. Alternatively the supply valve 73 and venting valve 72 may be operable by electrically, pneumatically or hydraulically powered actuators of which the actions are coupled. In such embodiments, it can be ensured that the venting valve 72 is opened when the supply valve 73 is closed and vice versa. Alternatively, they may be operated consecutively.

A delivery port 74 interconnects the chamber and a passage 75 through the movable support part 67. The passage 75 connects to a nozzle 76 extending through the closure 64. The nozzle 76 is configured for injecting pressurised gas into liquid in the bottle 63. The nozzle 76 protrudes in axial direction z with respect to the closure 64 from a lower axial end of the closure 64, which is the axial end distal to the chamber-defining part 66.

In the illustrated embodiment, the delivery port 74 and passage 75 have a smaller cross-sectional area than the supply port 68. In any case, at last one of the delivery port 74, passage 75 and a passage through the nozzle 76 functions as a flow constriction to ensure that there is a pressure drop between the chamber and an interior of the bottle 63.

The third carbonation apparatus 62 has relatively few parts, but the chamber-defining part 66 is subjected to relatively high internal pressures.

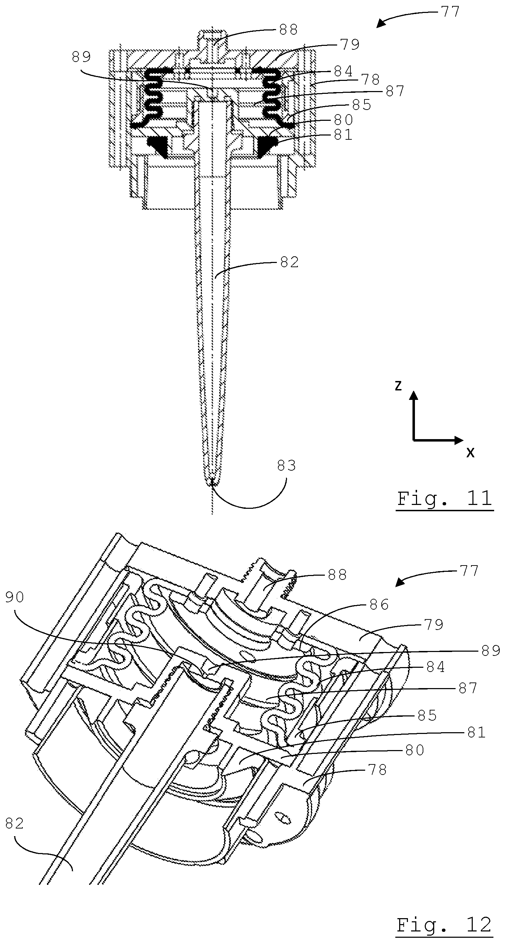

A pressing device assembly 77 (Figs. 11, 12) for use in a fourth carbonation apparatus, of a type corresponding to that of the third carbonation apparatus 62, comprises a frame 78, a cover part 79 and a movable support part 80, all relatively rigid, shape-stable structures. The cover part 79 is fixed to the frame 78 at an, in use, upper axial end with respect to an axis aligned with an axial direction z of movement of the movable support part 80. The movable support part 80 is axially movable relative to the frame 78.

The movable support part 80 is provided with an axially protruding annular stub onto which a closure body 81 is mounted. The closure body 81 may be made of resilient material, e.g. comprising a polymer. The material may be an elastomer, synthetic or natural rubber, e.g. silicone rubber. It is also possible for the closure body 81 to comprise multiple components of different materials, e.g. differing in elasticity.

The movable support part 80 defines a socket provided with an internal screw thread for receiving an end section of a nozzle 82 provided with an external screw thread. The nozzle 82 may be made of stainless steel, for example. An exit orifice 83 at an axial end of the nozzle distal to the movable support part 80 enables carbon dioxide gas to be injected into liquid in a container closed by the closure body 81. Because the nozzle 82 is arranged to move in axial direction with the closure body 81 and the movable support part 80 the distance between the exit orifice 83 and the liquid surface in the container will be the same for a given fill level, regardless of whether the container has exactly the nominal height for which the carbonation apparatus comprising the pressing device assembly 77 is designed. This allows the container to be selected from a range of containers having nominally identical shapes and dimensions but made of different materials, e.g. aluminium, glass or polymer material.

A chamber-defining part 84 is clamped to the movable support part 80 at one axial end by a sleeve 85 and to the cover part 79 at an opposite axial end by a clamping ring 86 (Fig. 12). The sleeve 85 may be fixed to the movable support part 80 and the clamping ring 86 to the cover part 79 by fasteners (not shown), e.g. screws, for example.

The chamber-defining part 84 defines at least a side wall that bounds and surrounds a chamber 87 for receiving fluid, in this case carbon dioxide gas. The chamber-defining part 84, or at least the section defining the side wall, is relatively flexible and may be made of an elastomer, e.g. silicone rubber. The chamber-defining part 84 is a moulded part, e.g. obtainable by injection-moulding. The chamber-defining part 66 can expand and contract in the axial direction z. The material of the chamber-defining part 84 is essentially gas-tight. The side wall comprises corrugations enabling axially directed contraction and expansion of the chamber-defining part 84.

A supply port 88 into the chamber 87 is defined in the cover part 79. The supply port 88 functions as the supply port 68 of the third carbonation apparatus 62.

A delivery port 89 through the movable support part 80 interconnects the chamber 87 and the nozzle 82. A constriction 90 (Fig. 12) is defined in the delivery port 89. This ensures that there is a pressure drop between the chamber 87 and an interior of the container closed by the pressing device comprising the pressing device assembly 77.

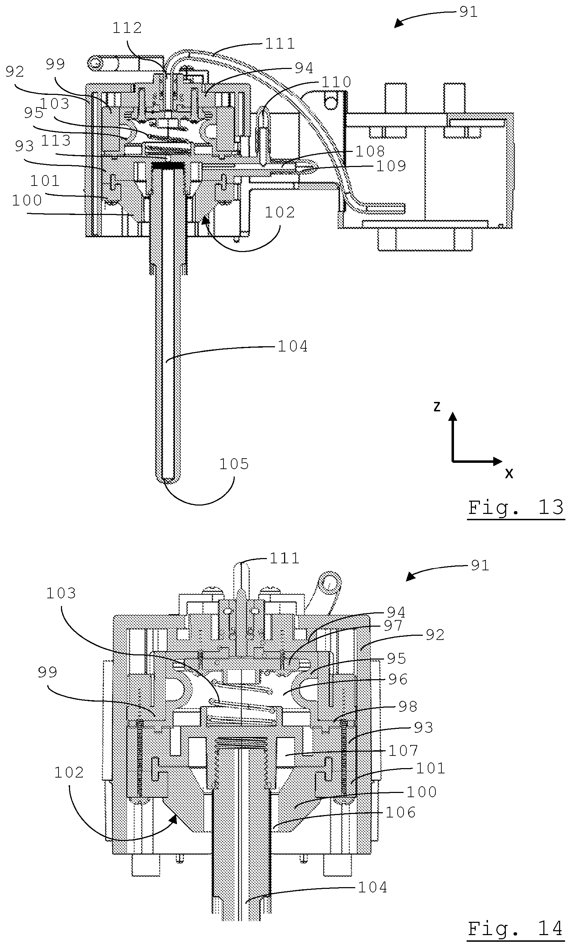

A head part 91 (Figs. 13, 14) of a fifth carbonation apparatus is a variation of the basic type of carbonation apparatus embodied by the third carbonation apparatus 62.

A support 92 is mounted to a chassis or housing of the fifth carbonation apparatus. A pressing device assembly is mounted to the support 92. A housing of the fifth carbonation apparatus may further comprise a body part with a source of pressurised fluid, in this case carbon dioxide gas, substantially corresponding to the body part 23 as described above for the second carbonation apparatus 20.

The pressing device assembly comprises a movable support part 93. The movable support part 93 is relatively rigid and thus shape-stable. The movable support part 93 may be made of metal or a polymer (composite) material, for example.

The pressing device assembly further comprises a connecting part 94 that connects the pressing device assembly to the support 92 or at least abuts the support 92 in axial direction. The connecting part 94 is also relatively rigid and thus shape-stable. The connecting part 94 may also be made of metal or a polymer (composite) material, for example.

The pressing device assembly further comprises a chamber-defining part 95 that defines at least a side wall that bounds and surrounds a chamber 96 (Fig. 14) for receiving fluid, in this case carbon dioxide gas. The chamber-defining part 95, or at least the section thereof defining the side wall, is relatively flexible and may be made of an elastomer, e.g. silicone rubber. The chamber-defining part 95 is a moulded part, e.g. obtainable by injection-moulding. The chamber-defining part 95 can expand and contract in an axial direction z, which is substantially vertically aligned in this example. The material of the chamber-defining part 95 is essentially gas-tight. The side wall comprises a corrugation enabling axially directed contraction and expansion of the chamber-defining part 95.

A support disc 97 fixed to the connecting part 94, e.g. by means of fasteners such as screws, clamps one axial end of the chamber-defining part 95 to the connecting part 94. The chamber-defining part 95 is provided with a flange 98 at an opposite axial end. The flange 98 is clamped between a sleeve 99 (Fig. 14) and the movable support part 93. The sleeve 99 limits radially outward expansion of the chamber-defining part 95. The chamber-defining part 95 is free to expand and contract in axial direction z along the sleeve 99, however.

A closure body 100 is shaped and configured essentially like the closure body 43 of the second carbonation apparatus 20 and held in the same manner between a clamping ring 101 and the movable support part 93. Thus, the closure body 100 may be made of at least one resilient material, e.g. comprising a polymer. The material may comprise an elastomer, synthetic or natural rubber, e.g. silicone rubber. The closure body 100 may comprise multiple components of different materials, e.g. differing in elasticity. In the illustrated embodiment, the closure body 100 is shaped like a stopper, having a frusto-conical exterior sealing surface 102 for engaging a rim of a container surrounding the mouth of the container.

A spring 103 is arranged in the chamber 96. The spring 103 urges axial ends of the chamber 96 apart. The chamber-defining part 95 is thus biased in the axially extended configuration. Abutments provided by the support 92 may limit this axial extent and at the same time allow the pressing device to be held to the support 92 without further use of fasteners. Engagement between the connecting part 94 and the support 92 may suffice to limit lateral movement, with the biasing force exerted by the spring 103 maintaining this engagement. The same effect can be achieved using biasing by other means than a spring 103.

A platform or other support (not shown) for supporting a container under the head part 91 may be comprised in the carbonation apparatus or provided by a support surface on which the carbonation apparatus is placed. The position of the platform or support and the height of the container are such that the container is placeable under the head part 91 with the mouth engaging the closure body 100. The closure body 100 is thereby moved axially towards the support 92 against a force exerted by the spring 103.

The movable support part 93 comprises a socket with an internal screw thread for engaging an external thread at an axial end of an elongated nozzle 104. An exit orifice 105 at an opposite axial end of the nozzle 104 distal to the movable support part 93 enables carbon dioxide gas to be injected into liquid in the container below a level of the liquid in the container. The nozzle 104 may be made of stainless steel, for example.

Because the nozzle 104 is arranged to move in axial direction with the closure body 100 and the movable support part 93 the distance between the exit orifice 105 and the liquid surface in the container will be the same for a given fill level, regardless of whether the container has exactly the nominal height for which the fifth carbonation apparatus comprising the head part 91 is designed. This allows the container to be selected from a range of containers having nominally identical shapes and dimensions but made of different materials, e.g. aluminium, glass or polymer material.

As in the other carbonation apparatuses described herein, the closure body 100 is shaped with a central aperture. The nozzle 104 extends through this aperture, such as to protrude in axial direction z with respect to the closure body 100 from an axial end of the closure body 100 distal to the chamber 96 and thus the chamber-defining part 95.

An annular passage 106 (Fig. 14) through the closure body 100 that is concentric with the nozzle 104 allows carbon dioxide gas that has risen to the liquid surface in a container closed by the closure body 100 to pass into a cavity 107 in the movable support part 93. In this example, the cavity 107 is also annular. A laterally extending passage 108 (Fig. 13) in the movable support part 93 interconnects the cavity 107 and first and second venting conduits 109,110. Each of the first and second venting conduits 109,110 is connected to a respective venting valve (not shown), of which at least one is a pressure relief valve. Generally, both will be pressure relief valves and arranged to open at different respective pressures. At least one pressure relief valve functions as a safety valve. The other valve may be a pressure relief valve for maintaining a desired pressure and/or may be switchable for pressure relief to remove the container with the carbonated liquid.

A flexible delivery tube 111 is connected to a source of pressurised fluid, e.g. as described above in connection with the second carbonation apparatus 20. The delivery tube 111 connects to a supply port 112 formed in and by the connecting part 94 and the support disc 97. The supply port 112 is thus located at an, in use upper, axial end of the chamber 96.

A delivery port 113 is defined in and by the movable support part 93 at an opposite axial end. In the illustrated embodiment, the delivery port 113 directly interconnects the socket in which the nozzle 104 is inserted and the chamber 96. The delivery port 113 has a smaller cross-sectional area than the supply port 112 in the illustrated embodiment. Regardless of whether this is the case, the delivery port 113 functions as a constriction to generate a pressure drop across the chamber 96.

In addition, the area projected in axial direction by a bottom wall of the chamber 96 (defined by the chamber-defining part 95 and the movable support part 93) is larger than the area projected in axial direction by the closure body 100.

The closure body 100 is thus pressed relatively firmly onto the container, but the chamber-defining part 95 must be able to withstand relatively high pressures.

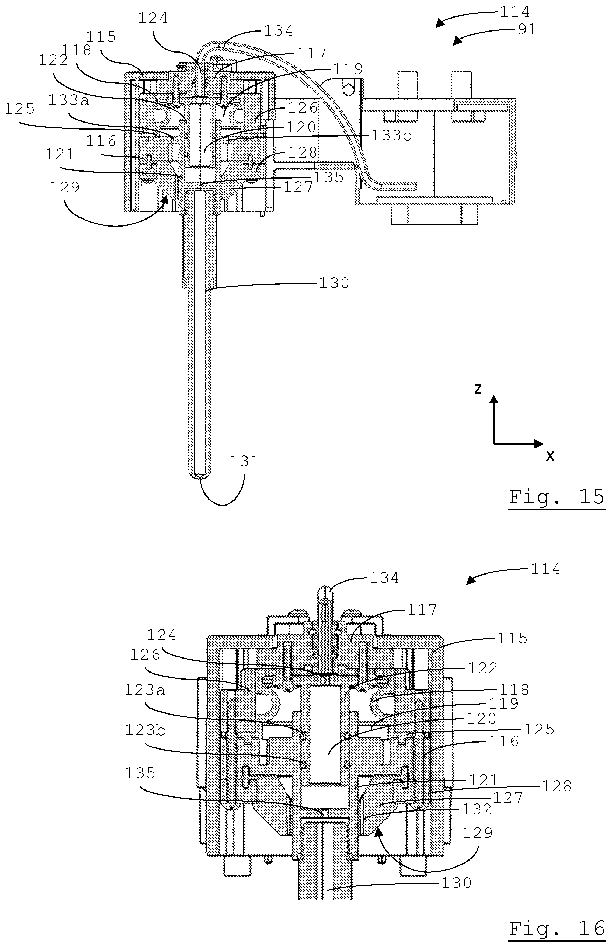

This is not the case for a head part 114 (Figs. 15, 16) of a sixth carbonation apparatus.

In this head part 114, a support 115 is mounted to a chassis or housing of the sixth carbonation apparatus. A pressing device assembly is mounted to the support 115. A housing of the sixth carbonation apparatus may further comprise a body part with a source of pressurised fluid, in this case carbon dioxide gas, substantially corresponding to the body part 23 as described above for the second carbonation apparatus 20.

The pressing device assembly comprises a movable support part 116. The movable support part 116 is relatively rigid and thus shape-stable. The movable support part 116 may be made of metal or a polymer (composite) material, for example.

The pressing device assembly further comprises a connecting part 117 that connects the pressing device assembly to the support 115 or at least abuts the support 115 in axial direction. The connecting part 117 is also relatively rigid and thus shape-stable. The connecting part 117 may also be made of metal or a polymer (composite) material, for example.

The pressing device assembly further comprises a chamber-defining part 118 that defines at least a side wall that bounds and surrounds a chamber for receiving fluid, in this case carbon dioxide gas. The chamber-defining part 118, or at least the section thereof defining the side wall, is relatively flexible and may be made of an elastomer, e.g. silicone rubber. The chamber-defining part 118 is a moulded part, e.g. obtainable by injection-moulding. The chamber-defining part 118 can expand and contract in an axial direction z, which is substantially vertically aligned in this example. The material of the chamber-defining part 118 may be essentially gas-tight. The side wall comprises a corrugation enabling axially directed contraction and expansion of the chamber-defining part 118.

The chamber comprises an outer chamber section 119 that surrounds an axially expandable and contractable inner chamber section 120. The outer chamber section 119 is separated, in this example in a substantially fluid-tight manner, from the inner chamber section 120 by a cylinder wall 121 and hollow piston 122. The hollow piston 122 and cylinder wall 121 together bound and define the inner chamber section 120. Seals 123a,b are provided between the hollow piston 122 and the cylinder wall 121. The hollow piston 122 is slidingly arranged in the cylinder formed by the cylinder wall 121. The cylinder wall 121 is an integral part of the movable support part 116 and protrudes in axial direction z into the chamber.

The hollow piston 122 is closed at an axial end distal to the cylinder wall 121 by a section that is essentially disc-shaped, but for a bore forming a section of a supply port 124 that further extends through the connecting part 117. This disc-shaped section comprises a flange. The disc-shaped section of the hollow piston 122 is fixed to the connecting part 117, e.g. by means of fasteners such as screws extending through apertures in the flange, so as to clamp one axial end of the chamber-defining part 118 to the connecting part 117.

The chamber-defining part 118 is provided with a flange 125 at an opposite axial end. The flange 125 is clamped between a sleeve 126 and the movable support part 116. The sleeve 126 limits radially outward expansion of the chamber-defining part 118. The chamber-defining part 118 is free to expand and contract in axial direction z along the sleeve 126, however.

A closure body 127 is shaped and configured essentially like the closure body 43 of the second carbonation apparatus 20 and held in the same manner between a clamping ring 128 and the movable support part 116. Thus, the closure body 127 may be made of at least one resilient material, e.g. comprising a polymer. The material may comprise an elastomer, synthetic or natural rubber, e.g. silicone rubber. The closure body 127 may comprise multiple components of different materials, e.g. differing in elasticity. In the illustrated embodiment, the closure body 127 is shaped like a stopper, having a frusto-conical exterior sealing surface 129 for engaging a rim of a container surrounding the mouth of the container.

A platform or other support (not shown) for supporting a container under the head part 114 may be comprised in the carbonation apparatus or provided by a support surface on which the carbonation apparatus is placed. The position of the platform or support and the height of the container are such that the container is placeable under the head part 114 with the mouth engaging the closure body 127. The closure body 127 is thereby lifted up against the gravitational pull on the closure body 127.

The movable support part 116 comprises a socket with an internal screw thread for engaging an external thread at an axial end of an elongated nozzle 130. An exit orifice 131 at an opposite axial end of the nozzle 130 distal to the movable support part 116 enables carbon dioxide gas to be injected into liquid in the container below a level of the liquid in the container. The nozzle 130 may be made of stainless steel, for example.

Because the nozzle 130 is arranged to move in axial direction with the closure body 127 and the movable support part 116 the distance between the exit orifice 131 and the liquid surface in the container will be the same for a given fill level, regardless of whether the container has exactly the nominal height for which the fifth carbonation apparatus comprising the head part 114 is designed. This allows the container to be selected from a range of containers having nominally identical shapes and dimensions but made of different materials, e.g. aluminium, glass or polymer material.

As in the other carbonation apparatuses described herein, the closure body 127 is shaped with a central aperture. The nozzle 130 extends through this aperture, such as to protrude in axial direction z with respect to the closure body 127 from an axial end of the closure body 127 distal to the chamber and thus the chamber-defining part 118.

An annular passage 132 through the closure body 127 that is concentric with the nozzle 130 allows carbon dioxide gas that has risen to the liquid surface in a container closed by the closure body 127 to pass into the outer chamber section 119 through interconnecting passages 133a,b through the movable support part 116.

A flexible delivery tube 134 is connected to a source of pressurised fluid, e.g. as described above in connection with the second carbonation apparatus 20. The delivery tube 134 connects to the supply port 124 formed in and by the connecting part 117 and the disc-shaped section of the hollow piston 122. The supply port 124, located at an, in use upper, axial end of the chamber, allows the pressurised carbon dioxide gas to enter the inner chamber section 120.

A delivery port 135 is defined in and by the movable support part 116 at an opposite axial end of the inner chamber section 120. In the illustrated embodiment, the delivery port 135 directly interconnects the socket in which the nozzle 130 is inserted and the inner chamber section 120. The delivery port 135 has a smaller cross-sectional area than the supply port 124 in the illustrated embodiment. Regardless of whether this is the case, the delivery port 135 functions as a constriction to generate a pressure drop across the inner chamber section 120.

The closure body 127 is thus pressed relatively firmly onto the container and the chamber-defining part 118 need not be able to withstand very high pressures. However, the pressurised fluid in the outer chamber section 119 still contributes to the force urging the closure body 127 into engagement with the mouth of the container.

The invention is not limited to the embodiments described above, which may be varied within the scope of the accompanying claims. For example, a least one venting port may be provided for release of pressure in the outer chamber section 119 in the pressing device assembly for use in the sixth carbonation apparatus.

Pressing devices disclosed herein without a spring part 8;49;103 may be varied through the addition of such a spring 8;49;103 or similar biasing device.

### List of reference numerals

- 1: - 1^{st} carbonation apparatus
- 2: - bottle
- 3: - closure
- 4: - support
- 5: - chamber-defining part
- 6: - movable support part
- 7: - connecting part
- 8: - spring
- 9: - sleeve
- 10: - 1^{st} passage
- 11: - fluid delivery conduit
- 12: - nozzle
- 13: - pressurised fluid source
- 14: - supply valve
- 15: - venting valve
- 16: - 2^{nd} passage
- 17: - venting conduit
- 18: - 1^{st} pressure relief valve
- 19: - 2^{nd} pressure relief valve
- 20: - 2^{nd} carbonation apparatus
- 21: - bottle
- 22: - housing
- 23: - body part
- 24: - head part
- 25: - replaceable carbon dioxide gas cylinder
- 26: - fitting
- 27: - plunger
- 28: - venting valve
- 29: - venting valve plunger
- 30: - lever
- 31: - button
- 32: - rocker
- 33: - delivery tube
- 34: - pressing device assembly
- 35: - movable support part
- 36: - connecting part
- 37: - support
- 38: - chamber-defining part
- 39: - chamber
- 40: - support disc
- 41: - flange
- 42: - sleeve
- 43: - closure body
- 44: - closure body flange
- 45: - upper rib
- 46: - lower rib
- 47: - clamping ring
- 48: - sealing surface
- 49: - spring
- 50: - socket
- 51: - nozzle
- 52: - exit orifice
- 53: - laterally extending passage
- 54: - concentric annular passage
- 55a,b: - passages
- 56: - pressure relief valve
- 57: - venting conduit
- 58: - 1^{st} aperture
- 59: - 1^{st} tube
- 60: - 2^{nd} aperture
- 61: - 2^{nd} tube
- 62: - 3^{rd} carbonation apparatus
- 63: - bottle
- 64: - closure
- 65: - support
- 66: - chamber-defining part
- 67: - movable support part
- 68: - supply port
- 69: - delivery conduit
- 70: - pressurised fluid source
- 71: - pressure relief valve
- 72: - venting valve
- 73: - supply valve
- 74: - delivery port
- 75: - passage
- 76: - nozzle
- 77: - pressing device assembly
- 78: - frame
- 79: - cover part
- 80: - movable support part
- 81: - closure body
- 82: - nozzle
- 83: - exit orifice
- 84: - chamber-defining part
- 85: - sleeve
- 86: - clamping ring
- 87: - chamber
- 88: - supply port
- 89: - delivery port
- 90: - constriction
- 91: - head part
- 92: - support
- 93: - movable support part
- 94: - connecting part
- 95: - chamber-defining part
- 96: - chamber
- 97: - support disc
- 98: - flange
- 99: - sleeve
- 100: - closure body
- 101: - clamping ring
- 102: - sealing surface
- 103: - spring
- 104: - nozzle
- 105: - exit orifice
- 106: - annular passage
- 107: - cavity
- 108: - passage
- 109: - 1^{st} venting conduit
- 110: - 2^{nd} venting conduit
- 111: - delivery tube
- 112: - supply port
- 113: - delivery port
- 114: - head part
- 115: - support
- 116: - movable support part
- 117: - connecting part
- 118: - chamber-defining part
- 119: - outer chamber section
- 120: - inner chamber section
- 121: - cylinder wall
- 122: - hollow piston
- 123a,b: - seals
- 124: - supply port
- 125: - flange
- 126: - sleeve
- 127: - closure body
- 128: - clamping ring
- 129: - sealing surface
- 130: - nozzle
- 131: - exit orifice
- 132: - annular passage
- 133a,b: - passages
- 134: - delivery tube
- 135: - delivery port

## Claims

1. Device for closing a container (2;21;63) at a mouth of the container (2;21;63), the device comprising:
a closure (3;43;64;81;100;127) for engaging the mouth of the container (2;21;63) to form a seal between an interior of the container (2;21;63) and an environment of the container (2;21;63) and of the closure (3;43;64;81;100;127); and
a pressing device for urging the closure (3;43;64;81;100;127) in an axial direction towards the mouth,
wherein the pressing device is mountable to a support (4;37;65;92;115) and carries the closure (3;43;64;81;100;127), and
wherein the pressing device comprises a chamber (39;87;96;119,120) for accommodating pressurised fluid,
wherein the chamber (39;87;96;119,120) is configured to expand and contract in at least the axial direction in dependence on a fluid pressure in the chamber (39;87;96;119,120) to move the closure (3;43;64;81;100;127) in axial direction (z) relative to the support (4;37;65;92;115), and
wherein the chamber (39;87;96;119,120) is provided with at least one port (55a,b, 58,59,60,61;68,74;88,89;112,113;124,135) for supplying a pressurised fluid to the chamber (39;87;96;119,120) and for allowing pressure to be released, **characterised in that**
a side wall surrounding the chamber (39;87;96;119,120) is defined by at least one part (5;38;66;84;95;118) comprised in the pressing device that is extendible and contractable in at least the axial direction *(z).*

2. Device according to claim 1,
wherein the side wall is a corrugated side wall.

3. Device according to claim 1 or 2,
wherein the pressing device comprises a resilient part (8;49;103) biasing the at least one part (5;38;95) defining the side wall into an extended configuration, e.g. a resilient part (8;49;103) comprising a spring.

4. Device according to any one of the preceding claims,
wherein the at least one part (5;38;66;84;95;118) defining at least the side wall comprises a moulded part.

5. Device according to any one of the preceding claims, further comprising a sleeve (9;42;85;99;126) laterally surrounding the part (5;38;84;95;118) defining at least the side wall over at least part of an axial extent of the side wall for supporting the part (5;38;84;95;118) defining at least the side wall in at least an expanded state of the chamber (39;87;96;119,120).

6. Device according to any one of the preceding claims,
wherein at least one passage (12;51,54;76;82;104,106;130;132) for a or the fluid is provided through the closure (3;43;64;81;100;127).

7. Device according to claim 6,
wherein the device comprises a nozzle (12;51;76;82;104;130) for supplying a or the fluid to the container (2;21;63) through the mouth of the container (2;21;63),
wherein the nozzle (12;51;76;82;104;130) protrudes in axial direction with respect to the closure (3;43;64;81;100;127) from an axial end of the closure (3;43;64;81;100;127) distal to the at least one part (5;38;66;84;95;118) defining at least the side wall.

8. Device according to claim 7,
wherein the nozzle (12;51;76;82;104;130) is fixed in position relative to the closure (3;43;64;81;100;127).

9. Device according to claim 7 or 8,
wherein the nozzle (12;51;104;130) is connectable to a source (13;25) of pressurised fluid, and
wherein at least one passage (16;54,55a,b;104,113;132,133a,b) for interconnecting the chamber (39;87;96;119,120) and an interior of the container (2;21) is provided through at least the closure (3;43;81;100;127).

10. Device according to claim 9,
wherein the chamber (39;87) is provided with at least one port (58,59,60,61) for interconnecting the chamber (39;87) and a passage (17;57) for connection to at least one valve (18,19;56) for venting fluid from the passage (17;57).

11. Device according to any one of the preceding claims,
wherein a projection of a bottom wall defining the chamber (39;87;96;119,120) at an axial end proximal to the closure (3;43;64;81;100;127) has an area larger than a maximum area of the mouth of the container (2;21;63) closable by the closure (3;43;64;81;100;127).

12. Apparatus for providing a beverage, e.g. a carbonated beverage, comprising:
a support (4;37;65;92;115);
a device according to any one of the preceding claims, mounted to the support (4;37;65;92;115); and
a system for connecting the device to a source (13;25;70) of pressurised fluid to supply the pressurised fluid to the chamber (39;87;96;119,120) of the pressing device and for allowing pressure in the chamber (39;87;96;119,120) to be released.

13. Apparatus according to claim 12, comprising a system for supplying a or the pressurised fluid to the container (2;21;63).

14. Apparatus according to claims 12 and 13, configured to supply the pressurised fluid to the chamber (39;87;96;119,120) via an interior of the container (2;21;63).

15. Use of at least one of a device according to any one of claims 1-11 and an apparatus according to any one of claims 12-14 to carbonate a beverage in a container (2;21;63) closed to an environment of the container (2;21;63) by the device.

## Patentansprüche

1. Vorrichtung zum Verschließen eines Behälters (2; 21; 63) an einer Öffnung des Behälters (2; 21; 63), wobei die Vorrichtung umfasst:
einen Verschluss (3; 43; 64; 81; 100; 127) zum Einrasten der Öffnung des Behälters (2; 21; 63), um eine Abdichtung zwischen einem Inneren des Behälters (2; 21; 63) und einer Umgebung des Behälters (2; 21; 63) und des Verschlusses (3; 43; 64; 81; 100; 127) zu bilden; und
eine Pressvorrichtung zum Drücken des Verschlusses (3; 43; 64; 81; 100; 127) in einer Axialrichtung zur Öffnung hin,
wobei die Pressvorrichtung an einer Halterung (4; 37; 65; 92; 115) anbringbar ist und den Verschluss (3; 43; 64; 81; 100; 127) trägt, und
wobei die Pressvorrichtung eine Kammer (39; 87; 96; 119, 120) zur Aufnahme von unter Druck stehendem Fluid umfasst,
wobei die Kammer (39; 87; 96; 119, 120) so konfiguriert ist, dass sie sich in Abhängigkeit von einem Fluiddruck in der Kammer (39; 87; 96; 119, 120) zum Bewegen des Verschlusses (3; 43; 64; 81; 100; 127) in Axialrichtung (*z*) relativ zur Halterung (4; 37; 65; 92; 115) mindestens in der Axialrichtung ausdehnt und zusammenzieht, und
wobei die Kammer (39; 87; 96; 119, 120) mit mindestens einem Anschluss (55a, b, 58, 59, 60, 61; 68, 74; 88, 89; 112, 113; 124, 135) zum Zuführen eines unter Druck stehenden Fluids in die Kammer (39; 87; 96; 119, 120) und zum Ermöglichen des Druckabbaus bereitgestellt ist, **dadurch gekennzeichnet, dass**
eine Seitenwand, die die Kammer (39; 87; 96; 119, 120) umgibt, durch mindestens ein Teil (5; 38; 66; 84; 95; 118) definiert ist, das in der Pressvorrichtung enthalten ist und das sich mindestens in der Axialrichtung (*z*) erweitern und zusammenziehen lässt.

2. Vorrichtung nach Anspruch 1,
wobei die Seitenwand eine gewellte Seitenwand ist.

3. Vorrichtung nach Anspruch 1 oder 2,
wobei die Pressvorrichtung ein elastisches Teil (8; 49; 103) umfasst, das das mindestens eine Teil (5; 38; 95), das die Seitenwand definiert, in eine erweiterte Konfiguration vorspannt, z. B. ein elastisches Teil (8; 49; 103), das eine Feder umfasst.

4. Vorrichtung nach einem der vorstehenden Ansprüche,
wobei das mindestens eine Teil (5; 38; 66; 84; 95; 118), das mindestens die Seitenwand definiert, ein Formteil umfasst.

5. Vorrichtung nach einem der vorstehenden Ansprüche, weiter umfassend eine Hülse (9; 42; 85; 99; 126), die das Teil (5; 38; 84; 95; 118), das mindestens die Seitenwand definiert, über mindestens einen Teil einer axialen Erweiterung der Seitenwand zum Halten des Teils (5; 38; 84; 95; 118), das mindestens die Seitenwand definiert, in mindestens einem ausgedehnten Zustand der Kammer (39; 87; 96; 119, 120) seitlich umgibt.

6. Vorrichtung nach einem der vorstehenden Ansprüche,
wobei mindestens ein Durchgang (12; 51, 54; 76; 82; 104, 106; 130; 132) für ein oder das Fluid durch den Verschluss (3; 43; 64; 81; 100; 127) bereitgestellt ist.

7. Vorrichtung nach Anspruch 6,
wobei die Vorrichtung eine Düse (12; 51; 76; 82; 104; 130) zum Zuführen eines oder des Fluids in den Behälter (2; 21; 63) durch die Öffnung des Behälters (2; 21; 63) umfasst,
wobei die Düse (12; 51; 76; 82; 104; 130) in Bezug auf den Verschluss (3; 43; 64; 81; 100; 127) von einem axialen Ende des Verschlusses (3; 43; 64; 81; 100; 127) distal zu dem mindestens einen Teil (5; 38; 66; 84; 95; 118), das mindestens die Seitenwand definiert, in Axialrichtung hervorragt.

8. Vorrichtung nach Anspruch 7,
wobei die Düse (12; 51; 76; 82; 104; 130) relativ zum Verschluss (3; 43; 64; 81; 100; 127) fest positioniert ist.

9. Vorrichtung nach Anspruch 7 oder 8,
wobei die Düse (12; 51; 104; 130) mit einer Quelle (13; 25) von unter Druck stehendem Fluid verbindbar ist; und
wobei mindestens ein Durchgang (16; 54, 55a, b; 104, 113; 132, 133a, b) zum Koppeln der Kammer (39; 87; 96; 119, 120) und eines Inneren des Behälters (2; 21) durch mindestens den Verschluss (3; 43; 81; 100; 127) bereitgestellt ist.

10. Vorrichtung nach Anspruch 9,
wobei die Kammer (39; 87) mit mindestens einem Anschluss (58, 59, 60, 61) zum Koppeln der Kammer (39; 87) und einem Durchgang (17; 57) zum Verbinden mit mindestens einem Ventil (18,19; 56) zum Abführen von Fluid aus dem Durchgang (17; 57) bereitgestellt ist.

11. Vorrichtung nach einem der vorstehenden Ansprüche,
wobei ein Vorsprung einer Bodenwand, die die Kammer (39; 87; 96; 119, 120) definiert, an einem axialen Ende proximal zum Verschluss (3; 43; 64; 81; 100; 127) eine Fläche aufweist, die größer ist als eine maximale Fläche der Öffnung des Behälters (2; 21; 63), der durch den Verschluss (3; 43; 64; 81; 100; 127) verschließbar ist.

12. Einrichtung zur Bereitstellung eines Getränks, z. B. eines kohlensäurehaltigen Getränks, umfassend:
eine Halterung (4; 37; 65; 92; 115);
eine Vorrichtung nach einem der vorstehenden Ansprüche, die an der Halterung (4; 37; 65; 92; 115) angebracht ist; und
ein System zum Verbinden der Vorrichtung mit einer Quelle (13; 25; 70) von unter Druck stehendem Fluid, um der Kammer (39; 87; 96; 119, 120) der Pressvorrichtung das unter Druck stehende Fluid zuzuführen und um zu ermöglichen, dass Druck in der Kammer (39; 87; 96; 119, 120) abgebaut wird.

13. Einrichtung nach Anspruch 12, umfassend ein System zum Zuführen eines oder des unter Druck stehenden Fluids in den Behälter (2; 21; 63).

14. Einrichtung nach den Ansprüchen 12 und 13, die so konfiguriert ist, dass sie der Kammer (39; 87; 96; 119, 120) das unter Druck stehende Fluid über ein Inneres des Behälters (2; 21; 63) zuführt.

15. Verwendung mindestens einer von einer Vorrichtung nach einem der Ansprüche 1-11 und einer Einrichtung nach einem der Ansprüche 12-14 zum Karbonisieren eines Getränks in einem Behälter (2; 21; 63), der gegenüber einer Umgebung des Behälters (2; 21; 63) verschlossen ist, durch die Vorrichtung.

## Revendications

1. Dispositif de fermeture d'un récpipient (2 ; 21 ; 63) au niveau d'une ouverture du récipient (2 ; 21 ; 63), le dispositif comprenant :
une fermeture (3 ; 43 ; 64 ; 81 ; 100 ; 127) pour mettre en prise l'ouverture du récipient (2 ; 21 ; 63) pour former un joint étanche entre l'intérieur du récipient (2 ; 21 ; 63) et un environnement du récipient (2 ; 21 ; 63) et de la fermeture (3 ; 43 ; 64 ; 81 ; 100 ; 127) ; et
un dispositif de pression pour forcer la fermeture (3 ; 43 ; 64 ; 81 ; 100 ; 127) dans une direction axiale vers l'ouverture,
dans lequel le dispositif de pression est montable sur un support (4 ; 37 ; 65 ; 92 ; 115) et porte la fermeture (3 ; 43 ; 64 ; 81 ; 100 ; 127), et
dans lequel le dispositif de pression comprend une chambre (39 ; 87 ; 96 ; 119, 120) destiinée à contenir un fluide sous pression,
dans lequel la chambre (39 ; 87 ; 96 ; 119, 120) est configurée pour se dilater et se contracter au moins dans la direction axiale en fonction d'une pression de fluide dans la chambre (39 ; 87 ; 96 ; 119, 120) pour déplacer la fermeture (3 ; 43 ; 64 ; 81 ; 100 ; 127) dans la direction axiale (*z*) par rapport au support (4 ; 37 ; 65 ; 92 ; 115), et
dans lequel la chambre (39 ; 87 ; 96 ; 119, 120) est dotée d'au moins un orifice (55a,b, 58, 59, 60, 61 ; 68, 74 ; 88, 89 ; 112, 113 ; 124, 135) pour alimenter la chambre (39 ; 87 ; 96 ; 119, 120) en fluide sous pression et pour permettre de libérer la pression, **caractérisé en ce que**
une paroi latérale entourant la chambre (39 ; 87 ; 96 ; 119, 120) est définie par au moins une partie (5 ; 38 ; 66 ; 84 ; 95 ; 118) comprise dans le dispositif de pression qui est extensible et rétractable, du moins en direction axiale (*z*).

2. Dispositif selon la revendication 1,
dans lequel la paroi latérale est une paroi latérale ondulée.

3. Dispositif selon la revendication 1 ou 2,
dans lequel le dispositif de pression comprend une partie élastique (8 ; 49 ; 103) sollicitant la au moins une partie (5 ; 38 ; 95) définissant la paroi latérale dans une configuration étendue, par exemple une partie élastique (8 ; 49 ; 103) comprenant un ressort.

4. Dispositif selon l'une quelconque des revendications précédentes,
dans lequel la au moins une partie (5 ; 38 ; 66 ; 84 ; 95 ; 118) définissant au moins la paroi latérale comprend une partie moulée.

5. Dispositif selon l'une quelconque des revendications précédentes, comprenant en outre un manchon (9 ; 42 ; 85 ; 99 ; 126) entourant latéralement la partie (5 ; 38 ; 84 ; 95 ; 118) définissant au moins la paroi latérale sur au moins une partie d'une étendue axiale de la paroi latérale pour supporter la partie (5 ; 38 ; 84 ; 95 ; 118) définissant au moins la paroi latérale dans au moins un état dilaté de la chambre (39 ; 87 ; 96 ; 119, 120).

6. Dispositif selon l'une quelconque des revendications précédentes,
dans lequel au moins un passage (12 ; 51, 54 ; 76 ; 82 ; 104, 106 ; 130 ; 132) pour un ou le fluide est ménagé à travers la fermeture (3 ; 43 ; 64 ; 81 ; 100 ; 127).

7. Dispositif selon la revendication 6,
dans lequel le dispositif comprend une buse (12 ; 51 ; 76 ; 82 ; 104 ; 130) pour alimenter le récipient (2 ; 21 ; 63) en fluide par l'ouverture du récipient (2 ; 21 ; 63),
dans lequel la buse (12 ; 51 ; 76 ; 82 ; 104 ;130) fait saillie dans la direction axiale par rapport à la fermeture (3 ; 43 ; 64 ; 81 ; 100 ; 127) à partir d'une extrémité axiale de la fermeture (3 ; 43 ; 64 ; 81 ; 100 ; 127) ; distale par rapport à la au moins une partie (5 ; 38 ; 66 ; 84 ; 95 ; 118) définissant au moins la paroi latérale.

8. Dispositif selon la revendication 7,
dans lequel la buse (12 ; 51 ; 76 ; 82 ; 104 ;130) est fixe en position par rapport à la fermeture (3 ; 43 ; 64 ; 81 ; 100 ; 127).

9. Dispositif selon la revendication 7 ou 8,
dans lequel la buse (12 ; 51 ; 104 ;130) est raccordable à une source (13 ; 25) de fluide sous pression, et
dans lequel au moins un passage (16 ; 54, 55a,b ;104, 113 ; 132, 133a,b) destiné à raccorder entre eux la chambre (39 ; 87 ; 96 ; 119, 120) et l'intérieur du récipient (2;21) est ménagé au moins à travers la fermeture (3 ; 43 ; 81 ; 100 ; 127).

10. Dispositif selon la revendication 9,
dans lequel la chambre (39 ; 87) est dotée d'au moins un orifice (58, 59, 60, 61) destiné à raccorder entre eux la chambre (39 ; 87) et un passage (17 ; 57), à raccorder à au moins une vanne (18, 19 ; 56) pour évacuer le liquide du passage (17 ; 57).

11. Dispositif selon l'une quelconque des revendications précédentes,
dans lequel une projection d'une paroi inférieure définissant la chambre (39 ; 87 ; 96 ; 119, 120) à une extrémité axiale proche de la fermeture (3 ; 43 ; 64 ; 81 ; 100 ; 127) présente une surface supérieure à une surface maximale de l'ouverture du récipient (2 ; 21 ; 63) fermable par la fermeture (3 ; 43 ; 64 ; 81 ; 100 ; 127).

12. Appareil de fourniture de boisson, par exemple une boisson gazeuse, comprenant :
un support (4 ; 37 ; 65 ; 92 ; 115) ;
un dispositif selon l'une quelconque des revendications précédentes, monté sur le support (4 ; 37 ; 65 ; 92 ; 115) ; et
un système pour raccorder le dispositif à une source (13 ; 25 ; 70) de fluide sous pression pour alimenter la chambre (39 ; 87 ; 96 ; 119, 120) en fluide sous pression du dispositif de pression et pour permettre de libérer la pression dans la chambre (39 ; 87 ; 96 ; 119, 120).

13. Appareil selon la revendication 12, comprenant un système d'alimentation du récipient (2 ; 21 ; 63) en fluide sous pression.

14. Appareil selon les revendications 12 et 13, configuré pour alimenter la chambre(39 ; 87 ; 96 ; 119, 120) en fluide sous pression par l'intérieur du récipient (2 ; 21 ; 63).

15. Utilisation d'au moins l'un parmi un dispositif selon l'une quelconque des revendications 1-11 et un appareil selon l'une quelconque des revendications 12-14 pour gazéifier une boisson dans un récipient (2 ; 21 ; 63) fermé par rapport à un environnement du récipient (2 ; 21 ; 63) par le dispositif.
